**Europäisches Patentamt**

**European Patent Office**

**Office européen des brevets**

(19)

(11) Veröffentlichungsnummer : **0 341 620 B1**

(12) # EUROPÄISCHE PATENTSCHRIFT

(45) Veröffentlichungstag der Patentschrift :
**04.03.92 Patentblatt 92/10**

(51) Int. Cl.$^5$ : **C08L 25/06,** C08L 53/02,
// (C08L25/06, 53:02),
(C08L53/02, 25:06)

(21) Anmeldenummer : **89108217.4**

(22) Anmeldetag : **06.05.89**

(54) **Transparente, thermoplastische Formmasse, Verfahren zu ihrer Herstellung und ihre Verwendung.**

(30) Priorität : **13.05.88 DE 3816294**

(43) Veröffentlichungstag der Anmeldung :
**15.11.89 Patentblatt 89/46**

(45) Bekanntmachung des Hinweises auf die
Patenterteilung :
**04.03.92 Patentblatt 92/10**

(84) Benannte Vertragsstaaten :
**AT BE CH DE FR GB IT LI NL**

(56) Entgegenhaltungen :
**DE-A- 2 610 068**
**US-A- 4 173 597**

(73) Patentinhaber : **BASF Aktiengesellschaft**
**Carl-Bosch-Strasse 38**
**W-6700 Ludwigshafen (DE)**

(72) Erfinder : **Walter Hans-Michael, Dr.**
**Am Mandelgarten 11**
**W-6713 Freinsheim (DE)**
Erfinder : **Bronstert, Klaus, Dr.**
**Gartenstrasse 26**
**W-6719 Carlsberg (DE)**
Erfinder : **Gausepohl, Hermann, Dr.**
**Neuweg 10**
**W-6704 Mutterstadt (DE)**
Erfinder : **Pohrt, Jürgen**
**Carolus-Vocke-Ring 72**
**W-6800 Mannheim 51 (DE)**

## Beschreibung

Die Erfindung betrifft eine transparente, thermoplastische Formmasse, die enthält, bezogen auf A+B,
A 5 bis 95 Gew.-% Polystyrol und
B 95 bis 5 Gew.-% eines nichtelastomeren, sternförmig verzweigten Blockcopolymerisates, aufgebaut aus, bezogen auf B,
$b_1$ 60 bis 95 Gew.-% Styrol und
$b_2$ 5 bis 40 Gew.-% mindestens eines konjugierten Diens mit 4 oder 5 C-Atomen,
das in an sich bekannter Weise durch sequentielle anionische Polymerisation mittels mindestens einer lithiumorganischen Verbindung als Initiator und in Gegenwart eines Lösungsmittels unter anschließender Kopplung hergestellt ist.

Zum Stand der Technik werden genannt:
(1) DE-A 19 59 922
(2) DE-A 25 50 226
(3) DE-A 25 20 227
(4) DE-A 26 10 068 und
(5) DE-A 37 38 748

In (1), (2), (3) und (5) werden polymodal aufgebaute Sternblockcopolymerisate aus Styrol und Dienen beschrieben. Aus (4) sind transparente Mischungen bekannt, die aus radikalisch erzeugtem Polystyrol und dem aus (1) bis (3) bekannten Sternblockcopolymeren aufgebaut sind.

Die aus (4) bekannten Mischungen zeigen insbesondere bei der Anwendung für hochwertige transparente Verpackungsmaterialien für das menschliche Auge deutlich erkennbare Nachteile in Bezug auf die Lichtdurchlässigkeit.

Es bestand daher die Aufgabe, diese Nachteile zu beheben. Die Lösung dieser Aufgabe gelingt mit Hilfe einer Formmasse gemäß Patentanspruch 1.

Die Erfindung betrifft daher eine transparente, thermoplastische Formmasse, enthaltend, bezogen auf die Summe aus A und B,
A 5 bis 95 Gew.-% Polystyrol und
B 95 bis 5 Gew.-% eines nichtelastomeren, sternförmig verzweigten Blockcopolymerisates, aufgebaut aus, bezogen auf B,
$b_1$ 60 bis 95 Gew.-% Styrol und
$b_2$ 5 bis 40 Gew.-% mindestens eines konjugierten Diens mit 4 oder 5 C-Atomen,
das in an sich bekannter Weise durch sequentielle anionische Polymerisation mittels mindestens einer lithiumorganischen Verbindung als Initiator und in Gegenwart eines Lösungsmittels unter anschließender Kopplung hergestellt ist.

Diese Formmasse ist dadurch gekennzeichnet, daß die Komponente A durch an sich bekannte anionische Polymerisation mittels mindestens einer lithiumorganischen Verbindung in Gegenwart eines organischen Lösungsmittels erzeugt wird.

Überraschenderweise weisen die erfindungsgemäßen Formmassen bei Verwendung von Polystyrol, das durch anionische Polymerisation mittels lithiumorganischer Verbindungen hergestellt wird, eine gegenüber den aus (4) bekannten Formmassen mit dem Auge deutlich verbesserte Transparenz auf. Die physikalischen Meßwerte sind dabei nur ca. 1,5 bis 5 % verbessert.

Nachstehend werden der Aufbau der erfindungsgemäßen Formmasse aus den Komponenten, die Komponenten und ihre Herstellung sowie die Herstellung der Formmasse beschrieben.

Die Formmasse enthält die Komponenten A und B. Sie kann auch aus diesen Komponenten bestehen. Für die Verarbeitung werden jedoch vorzugsweise, jeweils bezogen auf 100 Gew.-Teile A+B, 0,01 bis 10 Gew.-Teile, vorzugsweise 0,1 bis 7,0 Gew.-Teile übliche Zusatzstoffe (Komponente C) mitverwendet. Bezogen auf die Formmasse aus A+B, enthält sie
A 5 bis 95 Gew.-%, insbesondere 10 bis 80 Gew.-%
B 95 bis 5 Gew.-%, insbesondere 90 bis 20 Gew.-%.

Komponente A

Komponente A stellt ein durch übliche anionische Polymerisation erzeugtes Polystyrol mit enger Molmassenverteilung dar. Die Molmassenverteilung bei der anionischen Polymerisation ist üblicherweise wesentlich enger als bei der radikalischen oder thermisch initiierten Polymerisation. Üblicherweise ist das Verhältnis $\overline{M}_w/\overline{M}_n$ $\leqq 1,1$. Die Herstellung von Polystyrol auf anionischem Wege ist dem Fachmann an sich bekannt (vgl. M. Szwarc: Carbanions, Living Polymers, and Electron Transfer Processes, John Wiley Publ. 1968.

2

Üblicherweise wird dazu Styrol in Gegenwart einer lithiumorganischen Verbindung (0,01 bis 0,2 Gew.-%, bezogen auf Monomeres) der Formel R-Li, in der R aliphatische, cycloaliphatische oder aromatische Reste mit 1- bis 20 C-Atomen bedeuten können, üblicherweise in Gegenwart eines inerten Lösungsmittels, z.B. THF oder eines Lösungsmittels auf Basis von Paraffinen, Cycloparaffinen oder Aromaten polymerisiert.

Die Herstellung von anionischem Polystyrol erfolgt in der Weise, wie es für die Polymersegmente des Styrols in den aus (1) bis (4) und (5) bekannten Druckschriften angegeben ist, mit der Maßgabe, daß die zur Erzielung eines bestimmten Molekulargewichts bestimmte Styrolmenge auf einmal zugegeben und bis zu Ende polymerisiert wird. Danach wird die Reaktion (das Living Anion) mit Protonendonatoren, wie Alkoholen, $H_2O$ etc., in der in (1) bis (3) und (5) beschriebenen Weise abgebrochen und in an sich bekannter Weise das Wertprodukt gewonnen.

Die Molekulargewichte der Komponente A sollen im Bereich von 50.000 bis 800.000 liegen; dies entspricht Viskositätszahlen, VZ (gemessen 0,5%ig in Toluol bei 23°C) von 30 bis 350 [ml/g], bei Molgewichtsverteilungen im Bereich von 1.0 bis 1.1.

Komponente B

Als Komponente B kommen an sich bekannte nichtelastomere, sternförmig verzweigte Blockcopolymerisate in Betracht, die durch sequentielle anionische Polymerisation mittels mindestens einer lithiumorganischen Verbindung als Initiator und in Gegenwart eines Lösungsmittels unter anschließender Kopplung hergestellt sind.

Die genannten Blockcopolymerisate enthalten insbesondere, bezogen auf das Blockcopolymere 65 bis 90 Gew.-% Styrol und 35 bis 10 Gew.-% eines konjugierten Diens, insbesondere Butadien und/oder Isopren. Die Viskositätszahlen als Maß für die Molgewichte der polymodalen Sternblockcopolymerisate liegen im Bereich von 65 bis 110 ml/g, vorzugsweise 70 bis 95 ml/g (gemessen 0,5%ig in Toluol bei 23°C). Bevorzugt werden polymodale sternförmig verzweigte Blockcopolymerisate, die nach der Lehre der DE-OS 19 59 922, der DE-OS 25 20 266 und der DE-OS 25 20 262 bzw. der Druckschrift (5) hergestellt worden sind.

Komponente C

Die erfindungsgemäße Formmasse kann, insbesondere für bestimmte Anwendungsbereiche, übliche Zusatzstoffe, wie Stabilisatoren, Gleitmittel, Antiblockmittel, Flammschutzmittel und gegebenenfalls, wenn auf Transparenz kein Wert gelegt wird, auch Füllstoffe, Farbstoffe, Pigmente etc. enthalten und mit anderen Thermoplasten, z.B. PPE, Polycarbonat etc. abgemischt werden.

Herstellung der erfindungsgemäßen Formmasse

Die erfindungsgemäße Formmasse kann in an sich bekannter Weise auf übliche Mischaggregaten, wie Trommelmischern, Brabender-Mischer, Extrudern, Walzen etc. durch Mischen von z.B. Granulaten der Komponenten A und B (gegebenenfalls mit C) bei erhöhten Temperaturen hergestellt werden. Es ist auch möglich die Lösungen der Komponenten A und B nach der Beendigung der anionischen Polymerisation zu mischen und danach unter üblicher Entfernung des Lösungsmittels die Mischung aufzuarbeiten, z.B. durch Entgasung unter vermindertem Druck und bei erhöhter Temperatur. Vorzugsweise kann entweder die Komponente A oder die Komponente B bereits, das für die Verarbeitung der Mischung (Anwendung zum Tiefziehen oder Spritzgießen) erforderliche Zusatzstoff (Komponente C) enthalten.

Die in den Beispielen und Vergleichsversuchen beschriebenen Parameter wurden wie folgt bestimmt.
1. Viskositätszahl VZ in [ml/g] nach DIN 53 726 bei 23°C
2. Transparenz, Tr, in % wurde an 2 mm starken, spritzgegossenen Rundscheiben mit Hilfe eines Lange-Reflektometers mit Universalmeßeinheit UME 3, Meßkopf LT12 und Grünfilter VG9 bei senkrechter Bestrahlung bestimmt.

Für die Herstellung erfindungsgemäßer Formmassen und von Proben für Vergleichsversuche wurden die nachfolgend beschriebenen Produkte verwendet:

Komponente A

Herstellung von Polystyrolen $A_1$ und $A_2$ durch anionische Polymerisation

7,22 l Cyclohexan und die gesamte Styrolmenge wurden unter Inertbedingungen bei 40°C vorgelegt und die Verunreinigungsspuren mit verdünnter Butyllithiumlösung bis zum Auftreten einer sehr schwachen, bleibenden Gelbfärbung austitriert. Als Initiator wurde eine 1,45 normale Butyllithiumlösung in Cyclohexan mit 8 % n-Hexan (= Buli) verwendet. Nach vollständigem Umsatz (35 min.) wurden die lebenden Polymere durch Zusatz von 5 ml Isopropanol abgebrochen und das erhaltene Polymerisat durch Fällen aus Ethanol und anschließendem Trocknen des Fällguts (48 Stunden, 50°C, 10 mbar) aufgearbeitet.

$A_3$ ein radikalisch erzeugtes Polystyrol der VZ 96 [ml/g] Handelsprodukt 158 K der BASF AG;

$A_4$ ein radikalisch erzeugtes Polystyrol der VZ 74 [ml/g] Handelsprodukt KR 2608 der BASF AG.

Komponente B

Als Komponente B wurde ein Sternblockcopolymerisat mit 75 Gew.-% Styrol und 25 Gew.-% Butadien, hergestellt gemäß Beispiel 1 der DE-OS 25 50 227 mit einer VZ 82 [ml/g], verwendet.

Die in den Beispielen und Vergleichsversuchen genannten Teile oder Prozente beziehen sich auf das Gewicht.

Beispiele 1 und 2, Vergleichsversuche I und II

Die Abmischung des Sternblockcopolymers mit den Polystyrolen $A_1$ bis $A_4$ erfolgte auf einem ZSK 30-Extruder (Fa. Werner & Pfleiderer, Stuttgart) bei 230°C, und zwar in den in der Tabelle genannten Anteilen. Aus den erhaltenen Mischungen wurden Rundscheiben von 2 mm Stärke hergestellt und an diesen die Transparenz bestimmt.

Tabelle

|  |  | Beispiele | | Vergleichsversuche | |
|---|---|---|---|---|---|
|  |  | 1 | 2 | I | II |
| Polystyrol $A_1$ | [%] | 50 | - | - | - |
| Polystyrol $A_2$ | [%] | - | 50 | - | - |
| Polystyrol $A_3$ | [%] | - | - | 50 | - |
| Polystyrol A$ | [%] | - | - | - | 50 |
| Sternblockcop. | [%] | 50 | 50 | 50 | 50 |
| Transparenz | [%] | 72.7 | 74.2 | 71.3 | 68.0 |

Obwohl die Unterschiede der Zahlenwerte für die Transparenz zum Teil nicht sehr groß sind, bedeutet auch eine Verbesserung um ca. 1,5 % eine für das menschliche Auge sehr deutlich wahrnehmbare Steigerung der Lichtdurchlässigkeit. Diese kleinen Effekte spielen im Anwendungsbereich der hochwertigen Verpackungsmaterialien eine große Rolle.

**Patentansprüche**

1. Transparente, thermoplastische Formmasse, enthaltend, bezogen auf A+B,
A 5 bis 95 Gew.-% Polystyrol
B 95 bis 5 Gew.-% eines nichtelastomeren, sternförmig verzweigten Blockcopolymerisates, aufgebaut aus, bezogen auf B,
$b_1$ 60 bis 95 Gew.-% Styrol und
$b_2$ 5 bis 40 Gew.-% mindestens eines konjugierten Diens mit 4 oder 5 C-Atomen,
das in an sich bekannter Weise durch sequentielle anionische Polymerisation mittels mindestens einer lithiumorganischen Verbindung als Initiator und in Gegenwart eines Lösungsmittels unter anschließender Kopplung hergestellt ist,
dadurch gekennzeichnet, daß die Komponente A durch an sich bekannte anionische Polymerisation mittels mindestens einer lithiumorganischen Verbindung in Gegenwart eines organischen Lösungsmittels erzeugt wird.

2. Formmasse nach Anspruch 1, dadurch gekennzeichnet, daß sie, bezogen auf 100 Gew.-Teile A+B, 0,01. bis 10 Gew.-Teile üblicher Zusatzstoffe (Komponente C) aufweist.

3. Formmasse nach Anspruch 1, dadurch gekennzeichnet, daß sie die Komponenten A und B in folgenden Anteilen enthält.

A 10 bis 80 Gew.-%

B 90 bis 20 Gew.-%.

4. Formmasse nach Anspruch 1, dadurch gekennzeichnet, daß die Komponente B enthält, jeweils bezogen auf B,

$b_1$ 65 bis 90 Gew.-% Styrol

$b_2$ 35 bis 10 Gew.-% Butadien und/oder Isopren.


## Claims

1. A transparent thermoplastic molding material containing, based on A + B,

A from 5 to 95% by weight of polystyrene and

B from 95 to 5% by weight of a nonelastomeric star block copolymer which is composed of, based on B,

$b_1$ from 60 to 95% by weight of styrene and

$b_2$ from 5 to 40% by weight of one or more conjugated dienes of 4 or 5 carbon atoms

and is prepared in a conventional manner by sequential anionic polymerization using one or more organolithium compounds as an initiator and in the presence of a solvent with subsequent coupling, wherein component A is produced by conventional anionic polymerization using one or more organolithium compounds in the presence of an organic solvent.

2. A molding material as claimed in claim 1, which contains from 0.01 to 10 parts by weight of conventional additives (component C) per 100 parts by weight of A + B.

3. A molding material as claimed in claim 1, which contains the components A and B in the following amounts:

from 10 to 80% by weight of A and

from 90 to 20% by weight of B.

4. A molding material as claimed in claim 1, wherein component B contains, based in each case on B,

$b_1$ from 65 to 90% by weight of styrene and

$b_2$ from 35 to 10% by weight of butadiene and/or isoprene.


## Revendications

1. Masse à mouler thermoplastique transparente, contenant, par rapport à A+B,

A de 5 à 95% en poids de polystyrène,

B de 95 à 5% en poids d'un copolymère séquencé non élastomère, ramifié en forme d'étoile, composé, par rapport à B, de

$b_1$ 60 à 95% en poids de styrène et

$b_2$ 5 à 40% en poids d'au moins un diène conjugué à 4 ou 5 atomes de carbone,

qui est préparé, de façon connue en soi, par polymérisation anionique séquentielle au moyen d'au moins un composé organolithiné servant d'initiateur et en présence d'un solvant, suivie de copulation,

caractérisée en ce que le composant A est produit par polymérisation anionique en soi connue, au moyen d'au moins un composé organolithiné servant de catalyseur, en présence d'un solvant organique.

2. Masse à mouler selon la revendication 1, caractérisée en ce qu'elle contient, par rapport à 100 parties en poids de A+B, de 0,01 à 10 parties en poids d'additifs usuels (composant C).

3. Masse à mouler selon la revendication 1, caractérisée en ce qu'elle contient les composants A et B dans les proportions suivantes:

A 10 à 80% en poids,

B 90 à 20% en poids.

4. Masse à mouler selon la revendication 1, caractérisée en ce que le composant B contient, par rapport à B,

$b_1$ de 65 à 90% en poids de styrène,

$b_2$ de 35 à 10% en poids de butadiène et/ou d'isoprène.